Europäisches Patentamt

(19) European Patent Office

Office européen des brevets

(11) Publication number: **0 256 113**
**B1**

(12) **EUROPEAN PATENT SPECIFICATION**

(45) Date of publication of patent specification: **24.10.90**

(51) Int. Cl.⁵: **E 03 B 1/00, F 16 K 31/08**

(21) Application number: **87901807.5**

(22) Date of filing: **04.02.87**

(86) International application number:
**PCT/US87/00214**

(87) International publication number:
**WO 87/04745 13.08.87 Gazette 87/18**

(54) **FLUID-FLOW ISOLATION AND CONTROL APPARATUS.**

(30) Priority: **04.02.86 US 826022**

(43) Date of publication of application:
**24.02.88 Bulletin 88/08**

(45) Publication of the grant of the patent:
**24.10.90 Bulletin 90/43**

(84) Designated Contracting States:
**AT BE DE FR LU NL SE**

(56) References cited:
**GB-A-2 119 904**
**US-A-2 104 640**
**US-A-2 324 642**
**US-A-2 344 354**
**US-A-3 212 751**
**US-A-3 361 161**
**US-A-3 877 478**

(73) Proprietor: **Eidsmore, Paul George**
**2 Blue Hill Court**
**Scotts Valley California 95066 (US)**

(72) Inventor: **Eidsmore, Paul George**
**2 Blue Hill Court**
**Scotts Valley California 95066 (US)**

(74) Representative: **Jones, Colin et al**
**W.P. THOMPSON & CO. Coopers Building**
**Church Street**
**Liverpool L1 3AB (GB)**

Courier Press, Leamington Spa, England.

## Description

This invention relates to apparatus for controlling fluid flow.

Fluid under pressure is commonly controlled by means of a valve which includes a valve seat and a mating valve element which can be controllably positioned relative to the valve seat. However, the position of the mating element relative to the valve seat within the valve is typically controlled from outside the valve with the aid of sliding or rotating seals surrounding some portion of the movable valve element protruding through the valve.

Valves for controlling toxic fluids under pressure are known to obviate sliding or rotating seals by relying upon magnetic fields externally applied to control the operation of internal valve parts. Magnetically-actuated valves of various types are known. Specifically, US—A—3 361 161 describes apparatus for controlling the flow of fluid under pressure comprising a body which contains a valve aperture between a first fluid channel and a second fluid channel, a valve element mounted in the first fluid channel for movement towards and away from the valve aperture, a first magnet in said valve element, a second magnet positioned such that the first and second magnets coact to urge the valve element into its valve-closed position and magnetic means disposed externally of said first and second fluid channels for urging the valve element to its valve-open position.

In US—A—3 361 161, the first magnet is fixedly embedded in the movable valve element and the magnet means comprises a solenoid which coacts with a separate magnetisable member also embedded in the movable valve element. Furthermore, the first magnet is positioned in the movable valve element so as to be remote from the valve aperture and the second magnet coacting with the first magnet in the valve-closing direction is also in the first fluid channel, that is, at the same side of the valve seat as the valve element.

US—A—2 324 642 describes an electromagnetic valve in which a solenoid coacts with a magnetic core displaceably arranged in a chamber in the movable valve element. The purpose of this is to cause a hammer blow upon the movable valve element when the solenoid is energised to open the valve and when it is de-energised to close the valve, thereby helping to overcome any tendency for the valve element to stick. There is no magnet urging the valve element into its closed position.

Apparatus for controlling the flow of fluid under pressure, in accordance with the invention, is characterised in that the first magnet is slidably disposed in an elongate chamber within said valve element for movement between a first position adjacent the valve aperture and a second position remote from the valve aperture, and the second magnet is positioned within said second fluid channel, and in that said magnet means is operable to coact with said first magnet to displace the latter in said chamber away from the second magnet.

In accordance with the preferred embodiments of the present invention, single-acting and double-acting valve elements may be magnetically controlled from a location that is external to the valve body to provide fluid flow control and fluid system isolation without the potential hazard of sliding or rotating seals between the fluid system and the environment. The valving apparatus according to the present invention thus permits convenient control of fluids under pressure simply by manipulating the strength and orientation of an external magnetic field applied to internal magnetically-responsive valve elements. Single-acting valve operation according to one embodiment of the present invention may serve as a pressure-enhanced, normally- closed valve which can be magnetically activated to pass fluid in the downstream direction from the fluid supply. A double-acting valve according to another embodiment of the present invention may serve as a pressure-enhanced isolation valve which prevents fluid flow in both directions, for example, under conditions of excess back pressure, until magnetically activated by an external, controlling magnetic field.

The invention is further described, by way of example, with reference to the accompanying drawings, in which:-

Fig. 1 is a pictorial sectional view of a substantially cylindrically-shaped valve according to one embodiment of the present invention, in its normally-closed condition;

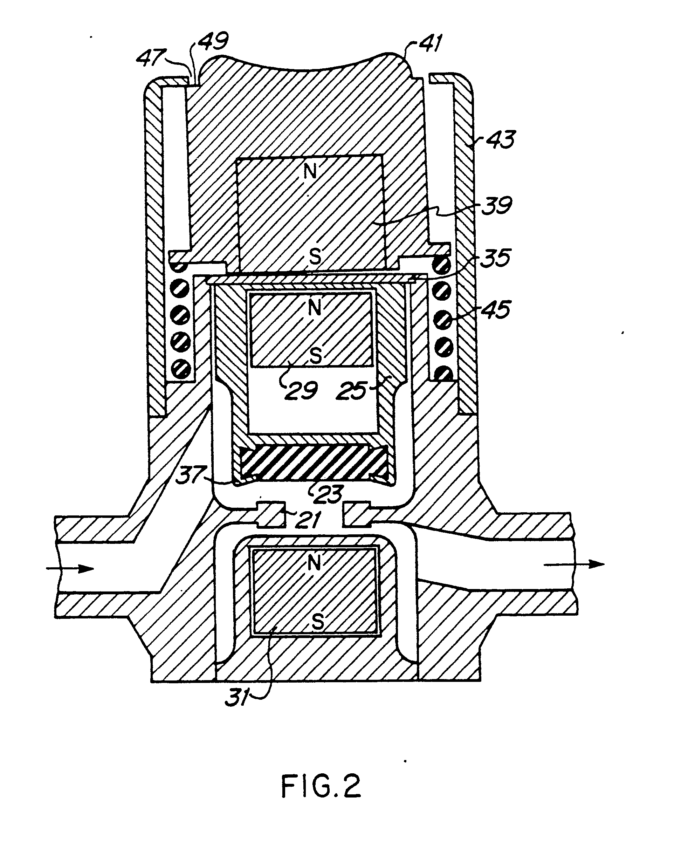

Fig. 2 is a pictorial sectional view of the embodiment of Fig. 1 shown in the actuated or open mode to pass fluid under pressure;

Fig. 3 is a pictorial sectional view of another embodiment of the present invention similar to the embodiment of Fig. 1 which provides seals against bidirectional fluid flow in its normally-closed condition;

Fig. 4 is a pictorial sectional view of the embodiment of Fig. 3 shown operating in the actuated or open mode to pass fluid under pressure; and Figs. 5a and 5b are pictorial sectional views of an embodiment of the valve similar to Fig. 3 in which the walls of the aperture are tapered to establish different limits of fluid pressure against which the valve may be opened.

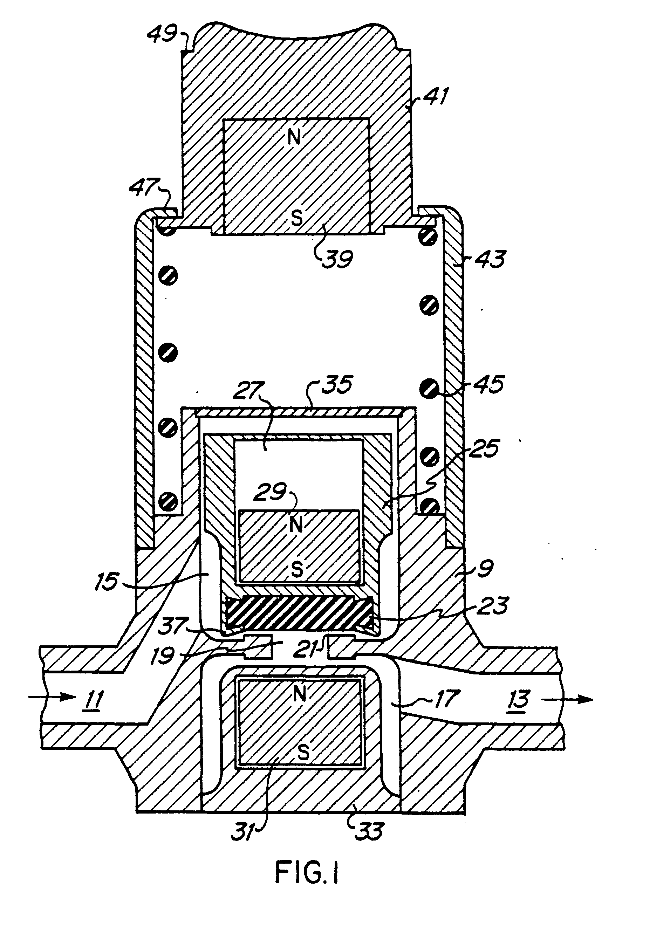

Referring now to Fig. 1, a valve has a metal body 9 which includes integral fluid ports 11 and 13. Alternatively, the fluid ports 11 and 13 may be welded to body 9 using electron-beam welding techniques, or the like, to eliminate screw threads, flanges and other discontinuities and the associated probabilities for leaks. Each of the fluid ports 11 and 13 leads to an internal channel 15, 17, respectively, which are coupled to each other through a valve aperture 19. Fluid flow through the valve is controlled by the spacing or engagement between the sealing surface 21 surrounding aperture 19 and an elastomeric valve seal 23 which is carried on movable element 25. The element 25 is substantially cylindrical and is mounted for sliding movement within the fluid channel 15 in a direction to carry the valve seal 23 into or away from sealing engagement with the sealing surface 21 of the aperture 19. The element 25 encloses a sealed internal, elongated cylindrical chamber 27 which contains a substantially cylindrically-shaped first magnet 29 which is free to slide from one end to the other within chamber 27.

A second magnet 31 is encapsulated within an end cap 33 which is disposed in the fluid channel 17. The second magnet 31 is positioned near the valve aperture 19 in close proximity and in attractive orientation to the magnet 29. The end cap 33 is sealed to the lower end of body 9 and an end plate 35 is sealed to upper end of body 9 and this may be done using electron-beam welding techniques, or the like, to avoid joints that may leak. Thus, the valve body 9 and associated elements 11, 13, 33 and 35 may all be formed of stainless steel, aluminium, plastic, or other suitable nonmagnetic material which may also be beam welded or otherwise sealed against leaks.

The valve embodiment illustrated in Fig. 1 operates in a normally-closed mode due to the magnetic attraction between magnets 29 and 31, which urges the elastomeric seal 23 or element 25 into sealing engagement with the sealing surface 21 of body 9 surrounding the valve aperture 19.

The seal 23 may be formed as a wafer or perfluoroelastomer (available commercially under the Trade Mark "Kalrez", from Du Pont Co.), or other suitable chemically inert material, and may be moulded or encapsulated on the end of element 25 by cold-rolling a flange 37 inwardly upon the wafer 23, as shown. With fluid applied under pressure to channel 15 via fluid port 11, the fluid seal formed by and between seal 23 and surface 21 is enhanced by the pressure differential between channels 15 and 17 acting on the cross sectional area of aperture 19. This pressure-enhanced sealing force and the magnetic-attractive sealing force must be overcome in order to open the valve to permit fluid flow therethrough.

Referring now to Fig. 1, the valve is held in the open position under control of an external magnetic actuator 39. This third magnet 39 provides the controlling magnetic flux and is encapsulated within a manually-depressable push button 41. The push button 41 is held captive on the outside of valve body 9 by the cylindrical guide 43 and is biassed by a spring 45 to the distal or inactive position illustrated in Fig. 1. Third magnet 39 is shown as being generally larger than the first magnet 29, but the magnetic flux from third magnet 39 should be sufficient to attract first magnet 29 away from its lower position within chamber 27 in close proximity to second magnet 31 (thus sealing the aperture 19) to its upper position within chamber 27 in close proximity to third magnet 39. In this upper position, the element 25 with seal 23 is moved upwardly and away from sealing surface 21 to open the valve aperture 19 for fluid flow therethrough. Also, with first magnet 29 in this upper position, its attraction to second magnet 31 is substantially reduced so that magnet 39 maintains control over valve operation for as long as it is positioned close to end plate 35. The push button 41 which carries third magnet 39 may be 'latched' in this control position by the inward flange 47 of the guide 43 engaged with shoulder 49 near the top of the button 41. Means other than the third magnet 39 in push button 41 may be used to control the valve. For example, an electromagnet may be attached to the valve body in known manner to selectively establish the requisite attractive magnetic field under electrical control. Similarly, an air-operated plunger may be attached to the valve body 9 and to the third magnet 39 in known manner to selectively position the third magnet 39 close to end plate 35 under pneumatic control. Thus, fluid flow through this embodiment of the valve of the present invention is controlled externally by magnetically attracting the relatively-movable sealing elements into sealing engagement, and by repositioning a movable first magnet carried by a sealing element away from its one position of sealing engagement (by its closely-spaced attraction to a biassing magnet) to another position which is closely adjacent an attractive, controlling third magnet and which is substantially spaced from the second or biassing magnet.

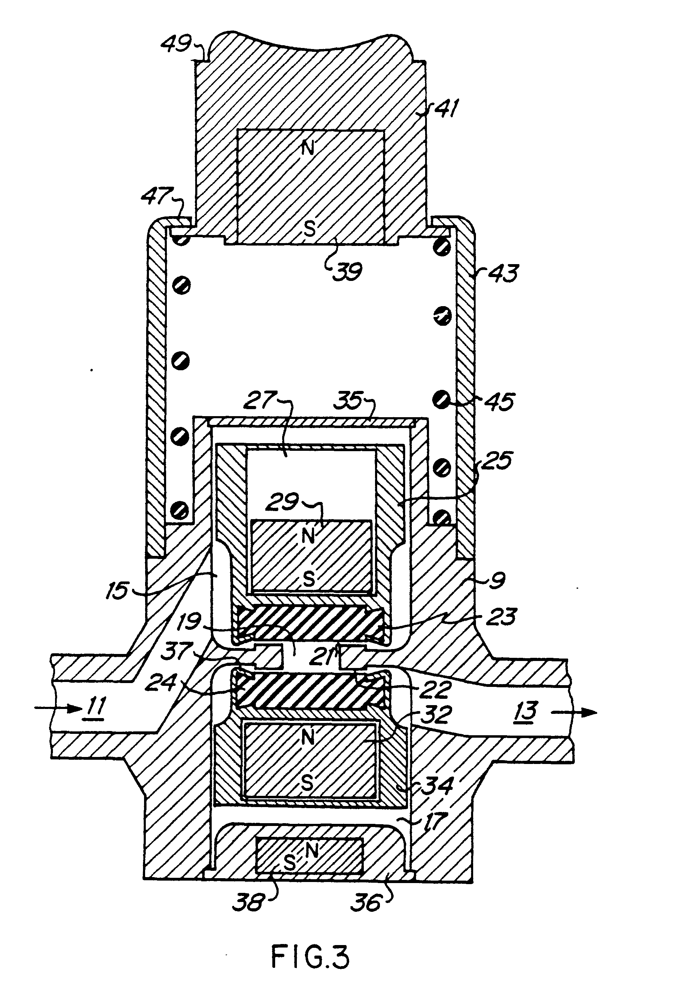

In certain fluid-flow controlling applications of the present invention, it is important to ensure that back pressure on the outlet side of the valve cannot overcome the magnetically-enhanced, pressure-enhanced seal and force fluid back through the valve. In such applications, it is advantageous to seal both inlet and outlet sides of the valve aperture 19 according to another embodiment of the present invention, as illustrated in Fig. 3. In that figure, the elements which are similar to elements illustrated in Fig. 1 bear the same legends. In the illustrated embodiment of Fig. 3, a second magnet 32 (for attracting the first magnet 29 carried in element 25 into sealing engagement) is itself encapsulated in a movable sealing element 34 which includes an elastomeric seal 24. Thus, with the first and second magnets 29 and 32 disposed in attractive orientation and carried by their respective sealing elements 25 and 34, the valve aperture 19 is sealed from both sides by seal 23 engaging the surrounding upper surface 21 and by seal 24 engaging the surrounding lower surface 22. These magnetically-enhanced seals are enhanced further by net fluid pressure in channel 15 (which enhances seal 21, 23) or by net fluid pressure in channel 17 (which enhances seal 22, 24), thereby assuring complete isolation between the fluid ports and channels that lead to aperture 19. A fourth magnet 38 (shown smaller to depict a source of relatively lower-level magnetic flux) is encapsulated within the end cap 36 in attractive orientation to second magnet 32, and the end cap 36 is beam welded to body 9, as discussed previously, to eliminate joints and the possibility of leaks. The magnet 38 of lower-level flux is thus incapable of overcoming the attractive force between first and second magnets 29 and 32 which biasses the seals closed, and the valve operates normally closed, as described above.

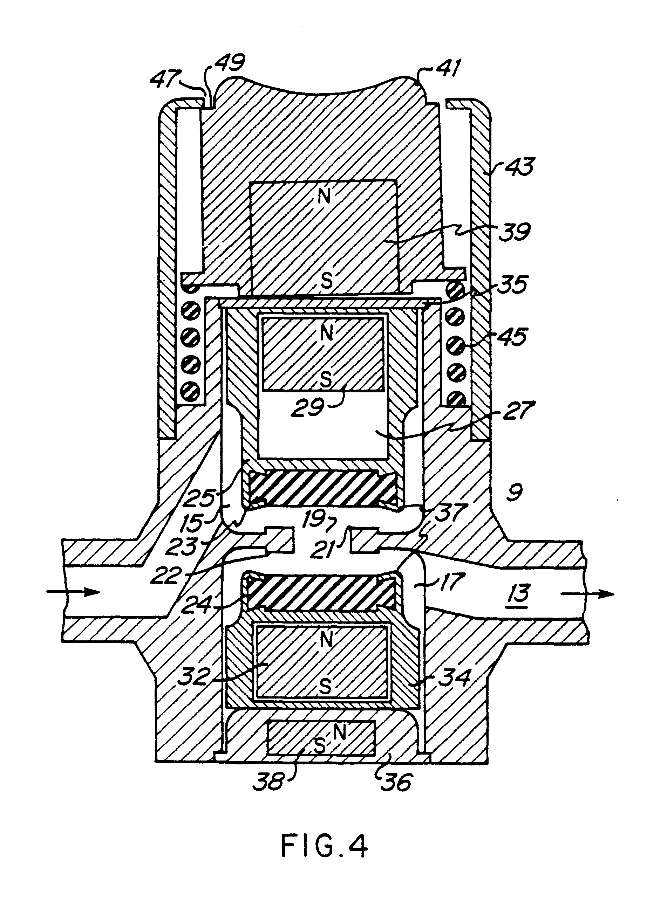

Referring now to Fig. 4, the valve of Fig. 3 is shown actuated to open the valve aperture 19. Specifically, the magnetic attraction between first and third magnets 29 and 39 (when third magnet 39 is repositioned, upon actuation of button 41, into close proximity with the end plate 35), repositions the first magnet 29 to the upper position within chamber 27 and carries element 25 and seal 21 away from engagement with sealing surface 21. This repositioning of first magnet 29 away from second magnet 32 substantially reduces the attractive force therebetween, and second magnet 32 is attracted with greater net force towards fourth magnet 38. Element 34 which carries the second magnet 32 and seal 24 is thus slidably repositioned away from sealing engagement between seal 24 and surface 22, and in close proximity to fourth magnet 38.

The valve remains in the open mode, as illustrated, under the control of magnetic flux from magnet 39. Once third magnet 39 is repositioned remotely from end plate 35 (or the magnetic flux of an equivalent electromagnet is decreased), the net attractive force between first and second magnets 29 and 32 is again restored, the first magnet 29 is repositioned within chamber 27 closely adjacent the valve aperture 21, and the respective elements 25, 34 and seals 23, 24 are repositioned against both sealing surfaces 21, 22 of aperture 19. The attractive force between fourth and second magnets 38 and 32 is reduced and is overcome by the attractive force between first and second magnets 29 and 32 to restore the valve to its normally-closed condition as illustrated in Fig. 3. Thus, fluid flow through this embodiment of the valve of the present invention is further controlled by repositioning movable, attractive second and first magnets carried by movable sealing elements disposed on each side of an aperture away from their respective positions of sealing engagement with the aperture, to other positions of their respective sealing elements away from sealing engagement with the aperture and closely proximate to other respective third and fourth attracting magnets.

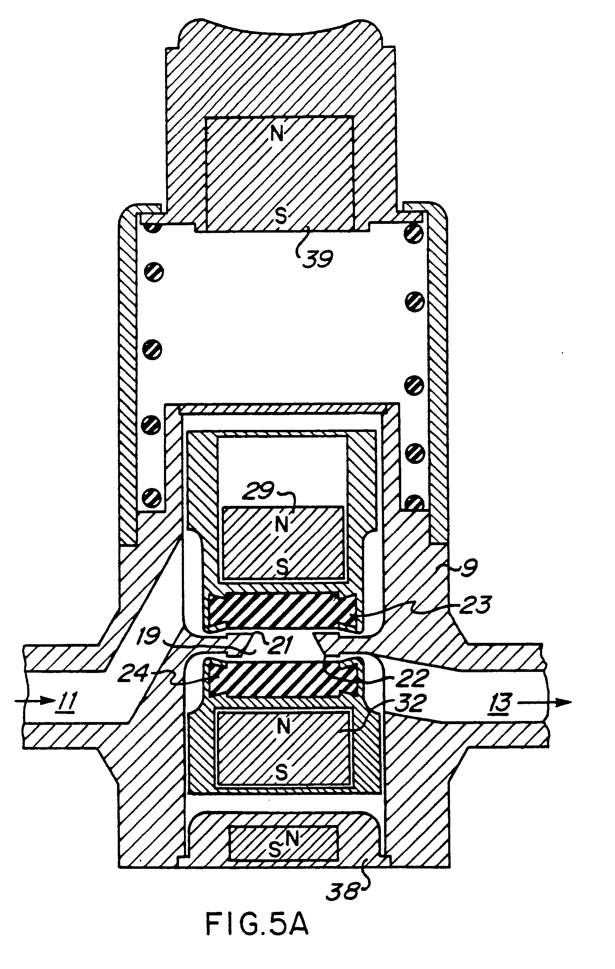

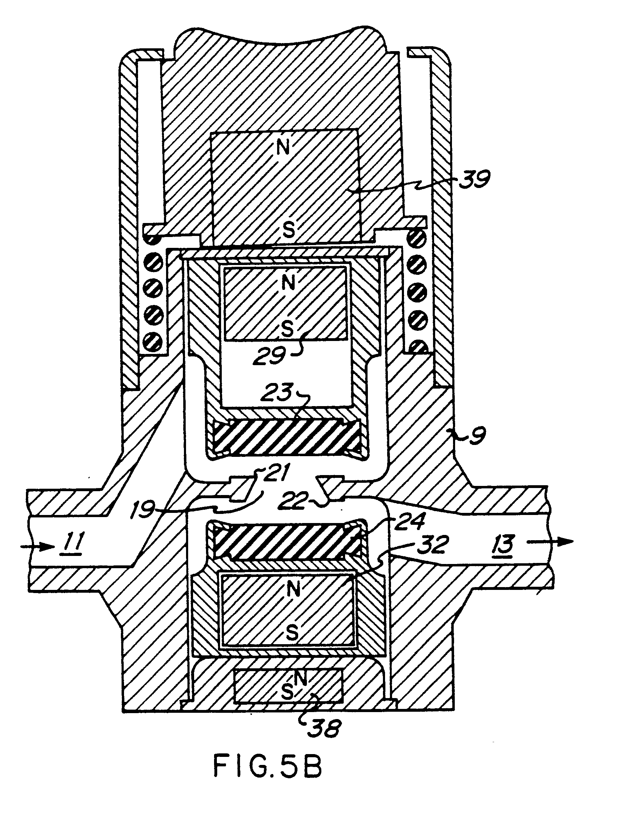

The valve of the present invention assures a margin of safety against opening under conditions of overpressurisation of the fluid supply. The pressure-enhanced seal against fluid flow, as previously described, and the limited magnetic force which is available internally to actuate the elements 25 and 34 establish a maximum pressure above which the valve cannot be opened. This is particularly important if the valve is placed in a system upstream of a glass or quartz vessel (as is common in semiconductor manufacturing systems) which may rupture or be damaged by excessive fluid pressure. Thus, in contrast to conventional valves which may be forced open under manual control, or by sufficient air pressure or electromagnetic force applied to the valve, operation of the present valve in overpressure supply conditions remains immune to externally-applied forces that might be imprudently applied to force it open. Pushing down harder upon the button 49 does not apply more force to open the valve than can be provided by the magnetic attraction of first and third magnets 29 and 39. The force available from these magnets can thus only overcome a certain limited supply of fluid pressure acting upon the effective area of the aperture. For a larger aperture and the same first and third magnets 29 and 39, only a lower level of supply pressure can be overcome to open the valve. Referring, therefore, to Figs. 5a and 5b, the walls of the valve aperture 19 are tapered so that the valve-seat surfaces 21 and 22 provide different areas over which the inlet pressure and outlet pressure, or back pressure, operate. In accordance with this feature of the present invention, the valve may be designed to open on the inlet side against a relatively high supply pressure while the outlet side may only be opened against the outlet or back pressure of lower level.

Therefore, the fluid flow isolation and control apparatus according to the present invention provides reliable normally-closed operation which can be controlled externally by magnetic means without need for sliding seals or bellows between internal fluid channels and the environment. In addition, the integrity against back flow through the valve can be preserved according to the present invention by providing double-acting sealing elements on both sides of a valve aperture under the unified control of a single source of magnetic flux.

## Claims

1. Apparatus for controlling the flow of fluid under pressure comprising a body (9) which contains a valve aperture (21) between a first fluid channel (15) and a second fluid channel (17), a valve element (25) mounted in the first fluid channel for movement towards and away from the valve aperture (21), a first magnet (29) in said valve element (25) a second magnet (31) positioned such that the first and second magnets (29 and 31 or 32) coact to urge the valve element into its valve-closed position and magnetic means (39) disposed externally of said first and second fluid channels (15, 17) for urging the valve element (35) to its valve-open position, characterised in that the first magnet (29) is slidably disposed in an elongate chamber (27) within said valve element (25) for movement between a first position adjacent the valve aperture (21) and a second position remote from the valve aperture, and the second magnet (31, 32) is positioned within said second fluid channel (17), and in that said magnet means (39) is operable to coact with said first magnet (29) to displace the latter in said chamber (27) away from the second magnet (31, 32).

2. Apparatus as claimed in claim 1, wherein said magnet means (39) comprises a third magnet disposed to be positioned selectively adjacent to said valve element (25) and remotely from said element (25) and attractively oriented relative to said first magnet (29), said third magnet (39) having magnetic flux strength to attract said first magnet (29) into said second position and to displace said element (25) away from sealing engagement with said valve aperture (21) when said third magnet (29) is positioned adjacent said element (25).

3. Apparatus as claimed in claim 2, wherein said third magnet (39) is disposed in a manually displaceable button (41).

4. Apparatus as claimed in claim 3, wherein the button (41) is biassed by a spring (45) to an inactive position in which said third magnet (39) is not operable to displace said first magnet (29) and may be latched in an active position in which said third magnet (39) is so operable.

5. Apparatus as claimed in any of claims 1 to 4, wherein said second magnet (32) is carried by an auxiliary element (34) which is disposed within said second fluid channel (17) for selective movement into and away from sealing engagement with said valve aperture (21) for selectively forming a fluid-tight seal therewith, said second magnet (32) and said auxiliary element (34) being resiliently urged away from sealing engagement with the aperture (21), and wherein said second magnet (32) and said first magnet (29), when in said first position, having sufficient magnetically attractive force to retain each of said elements (25, 34) in fluid-tight sealing engagement with said valve aperture (21).

6. Apparatus as claimed in claim 5, wherein a fourth magnet (38) is disposed near the second magnet (32) for magnetically urging the second magnet (32) and the auxiliary element (34) in a direction away from said valve aperture (21), and wherein said fourth magnet (38) has sufficient magnetically attractive force to urge the auxiliary element (34) away from sealing engagement with the valve aperture (21) while said first magnet (29) is in said second position, and insufficient magnetically attractive force to overcome the attractive force between the first and second magnets (29, 32) with said first magnet (29) in said first position.

**Patentansprüche**

1. Vorrichtung zur Steuerung des Stroms eines unter Druck stehenden Fluids mit einem Körper (9), der eine Ventilöffnung (21) zwischen einem ersten Fluidkanal (15) und einem zweiten Fluidkanal (17) enthält, mit einem Ventilelement (25), das in dem ersten Fluidkanal für eine Bewegung zu der Ventilöffnung (21) hin und davon weg angebracht ist, mit einem ersten Magnet (29) in dem Ventilelement (25), mit einem zweiten Magnet (31), der so angeordnet ist, daß der erste und der zweite Magnet (29 und 31 oder 32) zusammenwirken, um das Ventilelement in seine Ventilschließstellung zu drücken, und mit einer Magneteinrichtung (39), die außerhalb des ersten und zweiten Fluidkanals (15, 17) angeordnet ist, um das Ventilelement (35) in seine Ventiloffenstellung zu drükken, dadurch gekennzeichnet, daß der erste Magnet (29) gleitend verschiebbar in einer langgestreckten Kammer (27) in dem Ventilelement (25) für eine Bewegung zwischen einer ersten Stellung angrenzend an die Ventilöffnung (21) und einer zweiten Stellung entfernt von der Ventilöffnung angeordnet ist, und daß der zweite Magnet (31, 32) in dem zweiten Fluidkanal (17) angeordnet ist und daß die Magneteinrichtung (39) so betätigbar ist, daß sie mit dem ersten Magnet (29) zusammenwirkt, um letzteren in der Kammer (27) von dem zweiten Magnet (31, 32) weg zu verschieben.

2. Vorrichtung nach Anspruch 1, bei welcher die Magneteinrichtung (39) einen dritten Magnet aufweist, der so angeordnet ist, daß er selektiv angrenzend an das Ventilelement (25) und entfernt von dem Element (25) positionierbar und bezüglich des ersten Magneten (29) anziehend orientiert ist, wobei der dritte Magnet (39) eine magnetische Flußstärke aufweist, um den ersten Magnet (29) in die zweite Stellung zu ziehen und um das Element (25) von dem Dichtungseingriff mit der Ventilöffnung (21) weg zu verschieben, wenn der dritte Magnet (29) angrenzend an das Element (25) angeordnet ist.

3. Vorrichtung nach Anspruch 2, bei welcher der dritte Magnet (39) in einem von Hand verschiebbaren Knopf (41) angeordnet ist.

4. Vorrichtung nach Anspruch 3, bei welcher der Knopf (41) durch eine Feder (45) in eine inaktive Stellung vorgespannt ist, in welcher der dritte Magnet (39) nicht betätigbar ist, um den ersten Magnet (29) zu verschieben, und in einer aktiven Stellung verblockbar ist, in welcher der dritte Magnet (39) so betätigbar ist.

5. Vorrichtung nach einem der Ansprüche 1 bis 4, bei welcher der zweite Magnet (32) von einem Hilfselement (34) getragen ist, welches in dem zweiten Fluidkanal (17) für eine selektive Bewegung in den Dichtungseingriff mit der Ventilöffnung (21) und daraus weg angeordnet ist, um selektiv eine fluiddichte Abdichtung dazwischen auszubilden, wobei der zweite Magnet (32) und das Hilfselement (34) elastisch aus dem Dichtungseingriff (21) weggedrückt sind, und bei welcher der zweite Magnet (32) und der erste Magnet (29), wenn sie sich in ihrer ersten Stellung befinden, eine ausreichende magnetische Zugkraft haben, um jedes der Elemente (25, 34) in fluiddichtem Dichtungseingriff mit der Ventildichtung (21) zu halten.

6. Vorrichtung nach Anspruch 5, bei welcher ein vierter Magnet (38) in der Nähe des zweiten Magneten (32) angeordnet ist, um den zweiten Magnet (32) und das Hilfselement (34) in eine Richtung weg von der Ventilöffnung (21) magnetisch zu drücken, und bei welcher der vierte Magnet (38) eine ausreichende magnetische Zugkraft, um das Hilfselement (34) aus dem Dichtungseingriff mit der Ventilöffnung (21) wegzudrücken, während sich der erste Magnet (29) in der zweiten Stellung befindet, und eine nicht ausreichende magnetische Zugkraft hat, um die Zugkraft zwischen dem ersten und zweiten Magnet (29, 32) zu überwinden, während sich der erste Magnet (29) in der ersten Stellung befindet.

**Revendications**

1. Appareil de commande de la circulation d'un fluide sous pression, comprenant un corps (9) qui contient une lumière de soupape (21) entre un premier canal (15) et un deuxième canal (17), un élément obturateur (25) monté dans le premier canal pour pouvoir s'approcher et s'éloigner de la lumière (21), un premier aimant (29) dans cet élément obturateur (25), un deuxième aimant (31) placé de façon que les premier et deuxième aimants (29 et 31 ou 32) coopèrent pour rappeler l'élément obturateur en position de fermeture de la soupape, et un moyen magnétique (39) placé à l'extérieur des premier et deuxième canaux (15, 17) pour rappeler l'élément obturateur (25) en position d'ouverture de la soupape, caractérisé par le fait que le premier aimant (29) est monté coulissant dans une chambre allongée (27) prévue dans l'élément obturateur (25) pour se mouvoir entre une première position adjacente à la lumière (21) et une deuxième position écartée de celle-ci et le deuxième aimant (31, 32) est placé dans le deuxième canal (17), et que le moyen magnétique (39) est actionnable pour coopérer avec le premier aimant (29) pour déplacer ce dernier dans la chambre (27) en l'écartant du deuxième aimant (31, 32).

2. Appareil selon la revendication 1, dans lequel le moyen magnétique (39) comprend un troisième aimant disposé pour être placé sélectivement adjacent à l'élément obturateur (25) et écarté de celui-ci et orienté de façon à attirer le premier aimant (29), ce troisième aimant (39) ayant une intensité de flux magnétique suffisante pour attirer le premier aimant (29) et le mettre dans sa deuxième position et pour écarter l'élément obturateur (25) de la lumière (21) quand le troisième aimant (39) est placé adjacent à cet élément (25).

3. Appareil selon la revendication 2, dans lequel le troisième aimant (39) est placé dans un bouton déplaçable manuellement (41).

4. Appareil selon la revendication 3, dans lequel le bouton (41) est rappelé par un ressort (45) dans une position inactive dans laquelle le troisième aimant (39) n'est pas actionnable pour déplacer le premier aimant (29), et peut être verrouillé dans une position active dans laquelle le troisième aimant (39) est ainsi actionnable.

5. Appareil selon l'une des revendications 1 à 4, dans lequel le deuxième aimant (32) est porté par un élément auxiliaire (34) qui est placé dans le deuxième canal (17) pour se mouvoir sélectivement en prise d'obturation avec la lumière (21) et s'en dégager pour former sélectivement avec celle-ci un joint étanche au fluide, le deuxième aimant (32) et l'élément auxiliaire (34) étant rappelés 'élastiquement écartés de la lumière (21), et dans lequel le deuxième aimant (32) et le premier aimant (29), en première position, ont une force d'attraction magnétique suffisante pour maintenir chacun desdits éléments (25, 34) en prise d'obturation étanche au fluide avec la lumière (21).

6. Appareil selon la revendication 5, dans lequel un quatrième aimant (38) est placé près du deuxième aimant (32) pour magnétiquement rappeler ce dernier et l'élément auxiliaire (34) en direction opposée à la lumière (21), et dans lequel ce quatrième aimant (38) a une force d'attraction magnétique suffisante pour écarter l'élément auxiliaire (34) de la lumière (21) quand le premier aimant (29) est en deuxième position et une force d'attraction magnétique insuffisante pour vaincre la force d'attraction entre les premier et deuxième aimants (29, 32) quand le premier aimant (29) est en première position.

FIG.1

FIG.2

FIG.3

FIG.4

FIG.5A

FIG.5B